# EUROPÄISCHE PATENTSCHRIFT

(11) **EP 0 358 976 B1**
(45) Veröffentlichungstag und Bekanntmachung des Hinweises auf die Patenterteilung: **10.03.1993**
(21) Anmeldenummer: 89115317.3
(22) Anmeldetag: 19.08.1989
(51) Int. Cl.: B01D 25/12

(54) **Filterplatte für Filterelemente einer Filterpresse**
Filter plate for filter press filtering elements
Plaque filtrante pour les éléments filtrants d'une presse filtrante

(30) Priorität: 15.09.1988 DE 3831377
(43) Veröffentlichungstag der Anmeldung: 21.03.1990
(73) Patentinhaber: Lenser Kunststoff-Presswerk GmbH & Co. KG, D-89250 Senden (DE)
(72) Erfinder: Wildner, Gerhard, D-7916 Nersingen (DE)
(74) Vertreter: Fay, Hermann, Dipl.-Phys. Dr.

(56) Entgegenhaltungen:
- DE-A- 3 507 063
- DE-A- 3 609 564
- DE-A- 3 609 564
- FR-A- 2 384 526
- FR-A- 2 384 526

## Beschreibung

Die Erfindung betrifft eine Filterplatte für Filterelemente einer Filterpresse, bei der mehrere randseitig zusammengespannte, aus einer Stützwand mit einem umlaufenden Plattenrahmen bestehende Filterelemente zwischen sich Filterkammern mit darin mündenden Einläufen für die zu filtrierende Suspension bilden und ein- oder beidseitig randseitig dicht mit dem Filterelement verbundene, im übrigen durch ein Druckmittel in die Filterkammer vorbewegbare Preßwände tragen, die auf ihrer der jeweiligen Filterkammer zugekehrten Wandfläche mit einem Filtertuch belegte Profilvorsprünge aufweisen, welche unter dem Filtertuch ein an einem Auslauf angeschlossenes Rinnensystem für das Filtrat bilden, wobei die Preßwand einen ihren Anschluß an das Filterelement vermittelnden Randstreifen und eine entlang diesem Randstreifen verlaufende und mindestens im Umfang des Preßhubes der Preßwand verformbare Biegezone aufweist, wobei der Randstreifen von einer Anschlußleiste gebildet ist, die schräg von der Stützwand in zum Plattenrahmen abgewandter Richtung vorsteht und dabei zwischen sich und dem Plattenrahmen eine V-förmige Nut bildet.

Aus der FR-A-2 384 526 ist eine Filterplatte bekannt, die für solche Filterpressen vorgesehen ist, bei denen die Filterkammerräume eine größere Tiefe aufweisen, wie sie beispielsweise für die größeren Kuchendicken bei Filtrationsverfahren in der Chemie erforderlich sind. Daher ist dort ein relativ breiter Übergangsbereich zwischen der Preßwand und dem Plattenrahmen vorgesehen, der im Querschnitt die Gestalt eines Faltenbalges besitzt und damit die Möglichkeit einer erheblichen Veformung bietet. Dieser Aufbau besitzt jedoch den Nachteil, daß die Preßwand sich - insbesondere bei ungleichmäßigem Aufbau des Filterkuchens - in ihrer Ebene verschieben kann, da ein solcher Bewegungshub durch die Struktur des Übergangsbereiches ohne weiteres möglich ist. Dies kann jedoch zu Beschädigungen des Filtertuches führen.

Filterplatten ähnlicher Art sind auch beispielsweise in der DE-A-3 220 487 beschrieben. Es hat sich bei solchen Filterplatten jedoch als nachteilig herausgestellt, daß der Randstreifen unter dem Preßhub der Preßwand sowohl Biege- als auch Zugbelastungen in nicht unerheblichem Maße ausgesetzt ist, insbesondere dann, wenn die Filterkammer nur eine geringe Befüllung aufweist. Dabei kann vor allem bei Filterplatten mit Zentraleinlauf sogar der Fall auftreten, daß die Filterkammer von der Preßwand um den Zentraleinlauf herum völlig abgedichtet und damit eine weitere Befüllung verhindert wird.

Der Erfindung liegt die Aufgabe zugrunde, eine Filterplatte der eingangs genannten Art so auszubilden, daß die Belastungen des Randstreifens auch bei großem Hub der Preßwand verringert werden, daß weiterhin die Verformung der Biegezone in der Weise einstellbar ist, daß die maximale Biegebeanspruchung begrenzt wird, also vorgegebene Biegeradien nicht unterschritten werden.

Diese Aufgabe wird nach der Erfindung dadurch gelöst, daß die beiden Nutwände einen gegenseitigen Anschlag bilden und die Nutbreite so bemessen ist, daß die materialbedingt zulässige Biegeverformung der Anschlußleiste bei vollständig in die Filterkammer vorverstellter Preßwand nicht überschritten wird, daß ferner die in der verformbaren Biegezone befindlichen Profilvorsprünge als parallel zum Rand bzw. bogenförmig um den Zentraleinlauf verlaufende längliche Profilstege ausgebildet sind, wobei die in der unmittelbar an die Anschlußleiste angrenzenden Reihe angeordneten Profilstege etwa die doppelte Breite gegenüber den übrigen Profilstegen aufweisen, und daß die Bereiche zwischen den Profilvorsprüngen eine unterschiedliche, in Richtung zur Anschlußleiste hin zunehmende Dicke aufweisen.

Der durch die Erfindung erreichte Vorteil besteht zunächst darin, daß die Anschlußleiste sich bereits in ihrer Grundstellung in einer Ausrichtung befindet, in die bei maximalem Preßhub die Zugkraft wirkt. Somit treten in diesem Bereich vorwiegend nur noch Zugkräfte und nur in geringem Maße Biegeverformungen auf. Dies führt zu einer geringeren Materialermüdung und damit erhöhten Lebensdauer der Filterplatte. Durch die V-förmige Nut wird bei extremsten Belastungen darüber hinaus sicher gestellt, daß die dann einsetzenden Biegeverformungen durch die sich einander anlegende Nutwände begrenzt werden. Auf diese Weise läßt sich eine maximale Randkrümmung der Preßwand bei bestimmtem maximalem Preßhub festlegen. Durch die größere Breite der Profilstege in der unmittelbar an die Anschlußleiste angrenzenden Reihe wird ferner erreicht, daß in dem an die Anschlußleiste angrenzenden Bereich eine höhere Materialfestigkeit gegeben ist.

Da die Bereiche zwischen den Profilvorsprüngen eine unterschiedliche, in Richtung zur Anschlußleiste hin zunehmende Dicke aufweisen, wird ein kontinuierlicher Übergang von dem Randstreifen zur eigentlichen Preßwand erreicht, wobei sich die Materialstärke entsprechend der kleiner werdenden Belastung verringern kann.

In bevorzugter Ausführungsform der Erfindung ist vorgesehen, daß die zwischen den einzelnen Reihen der Profilstege innerhalb der Biegezone gebildeten Nuten V-förmige Nutwände aufweisen, die gegenseitig die Biegeverformung der Biegezone begrenzende Anschläge bilden. Auf diese Weise ist auch im Bereich der Biegezone sicher gestellt, daß unter extremen Hubbedingungen der Preßwand ein bestimmter Maximalwert der Biegebeanspruchung nicht überschritten wird.

Im folgenden wird die Erfindung an einem in der Zeichnung dargestellten Ausführungsbeispiel näher erläutert; es zeigen:
Fig. 1 eine Draufsicht auf eine nur teilweise dargestellte Filterplatte nach der Erfindung,
Fig. 2 einen Querschnitt durch den Gegenstand nach Fig. 1.

Die in der Zeichnung dargestellte Filterplatte ist für Filterelemente einer Filterpresse vorgesehen, bei der mehrere randseitig zusammengespannte Filterelemente zwischen sich Filterkammern 1 für die zu filtrierende Suspension bilden. Die Filterelemente weisen im einzelnen eine Stützwand 2 mit einem umlaufenden Plattenrahmen 3 auf und tragen ein- oder beidseitig randseitig dicht mit dem Filterelement verbundene, im übrigen durch ein Druckmittel in die Filterkammer 1 vorbewegbare Preßwände 4. Die Preßwände 4 weisen auf ihrer der jeweiligen Filterkammer 1 zugekehrten Wandfläche mit einem - nicht dargestellten - Filtertuch belegte Profilvorsprünge 5 auf, welche unter dem Filtertuch ein an einen Auslauf angeschlossenes Rinnensystem für das Filtrat bilden.

Die Preßwand 4 weist einen ihren Anschluß an das Filterelement vermittelnden Randstreifen 6 und eine entlang diesem Randstreifen 6 verlaufende und mindestens im Umfang des Preßhubes der Preßwand 4 verformbare Biegezone 7 auf.

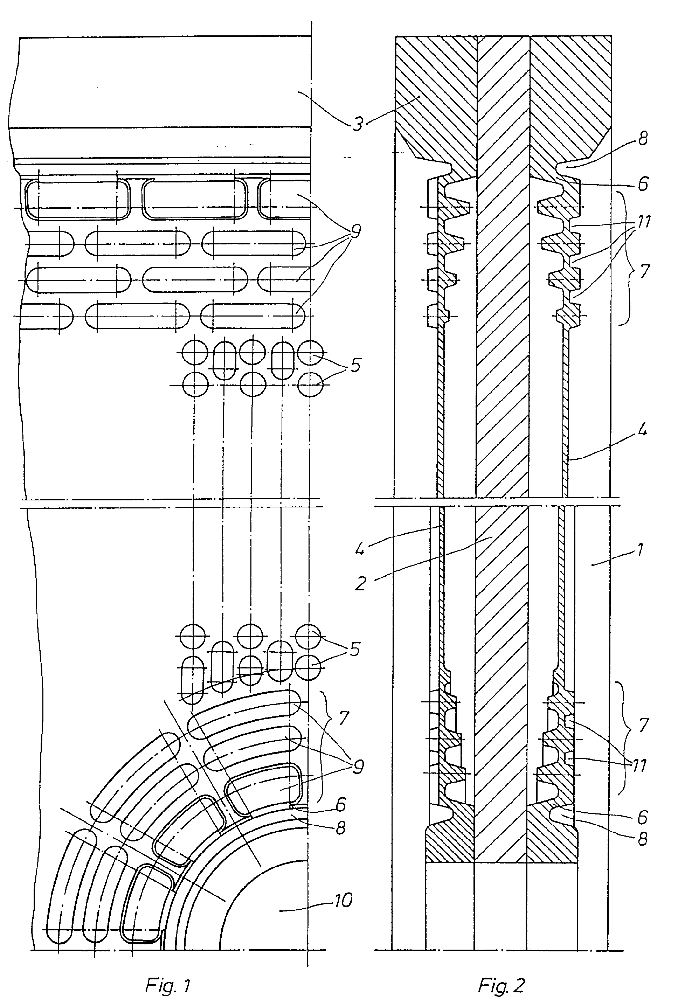

Wie sich insbesondere aus der Fig. 2 ergibt, ist der Randstreifen 6 von einer Anschlußleiste gebildet, die schräg von der Stützwand 2 in zum Plattenrahmen 3 abgewandter Richtung vorsteht und dabei zwischen sich und dem Plattenrahmen 3 eine V-förmige Nut 8 bildet. Die Breite dieser Nut 8 ist so bemessen, daß die beiden Nutwände einen die Biegeverformung der Anschlußleiste begrenzenden gegenseitigen Anschlag bilden. Auf diese Weise läßt sich durch entsprechende Wahl der Nutform und -breite eine maximale Biegeverformung der Anschlußleiste festlegen.

Die in der verformbaren Biegezone 7 befindlichen Profilvorsprünge 9 sind als parallel zum Rand bzw. bogenförmig um den Zentraleinlauf 10 verlaufende längliche Profilstege ausgebildet. Die in der unmittelbar an die Anschlußleiste angrenzenden Reihe angeordneten Profilstege weisen dabei etwa die doppelte Breite gegenüber den übrigen Profilstegen auf. Auf diese Weise wird in dem in der Regel besonders hohen Belastungen ausgesetzten Übergangsbereich von der Anschlußleiste 6 zur Biegezone 7 eine besonders hohe Festigkeit erreicht.

Um den Krümmungsverlauf der Preßwand 4 im Bereich der Biegezone 7 im einzelnen weiter einstellen zu können, besteht auch die in der Zeichnung nicht näher dargestellte Möglichkeit, den Bereichen zwischen den Profilvorsprüngen 9 eine unterschiedliche, in Richtung zur Anschlußleiste 6 hin zunehmende Dicke zu geben. Zur Vermeidung einer zu starken Biegeverformung unter sehr hohem Preßdruck kann schließlich die in der Zeichnung ebenfalls nur angedeutete Möglichkeit vorgesehen sein, daß die zwischen den einzelnen Reihen der Profilstege innerhalb der Biegezone 7 gebildeten Nuten 11 ebenfalls V-förmige Nutwände aufweisen, die gegenseitig die Biegeverformung begrenzende Anschläge bilden.

## Patentansprüche

1. Filterplatte für Filterelemente einer Filterpresse, bei der mehrere randseitig zusammengespannte, aus einer Stützwand (2) mit einem umlaufenden Plattenrahmen (3) bestehende Filterelemente zwischen sich Filterkammern (1) mit darin mündenden Einläufen (10) für die zu filtrierende Suspension bilden und ein- oder beidseitig randseitig dicht mit dem Filterelement verbundene, im übrigen durch ein Druckmittel in die Filterkammer vorbewegbare Preßwände (4) tragen, die auf ihrer der jeweiligen Filterkammer (1) zugekehrten Wandfläche mit einem Filtertuch belegte Profilvorsprünge (5, 9) aufweisen, welche unter dem Filtertuch ein an einen Auslauf angeschlossenes Rinnensystem für das Filtrat bilden, wobei die Preßwand (4) einen ihren Anschluß an das Filterelement vermittelnden Randstreifen (6) und eine entlang diesem Randstreifen verlaufende und mindestens im Umfang des Preßhubes der Preßwand verformbare Biegezone (7) aufweist, wobei der Randstreifen (6) von einer Anschlußleiste gebildet ist, die schräg von der Stützwand (2) in zum Plattenrahmen (3) abgewandter Richtung vorsteht und dabei zwischen sich und dem Plattenrahmen (3) eine V-förmige Nut (8) bildet, dadurch gekennzeichnet, daß die beiden Nutwände einen gegenseitigen Anschlag bilden und die Nutbreite so bemessen ist, daß die materialbedingt zulässige Biegeverformung der Anschlußleiste bei vollständig in die Filterkammer vorverstellter Preßwand nicht überschritten wird, daß ferner die in der verformbaren Biegezone (7) befindlichen Profilvorsprünge (9) als parallel zum Rand bzw. bogenförmig um den Zentraleinlauf (10) verlaufende längliche Profilstege ausgebildet sind, wobei die in der unmittelbar an die Anschlußleiste angrenzenden Reihe angeordneten Profilstege etwa die doppelte Breite gegenüber den übrigen Profilstegen aufweisen, und daß die Bereiche zwischen den Profilvorsprüngen (9) eine unterschiedliche, in Richtung zur Anschlußleiste hin zunehmende Dicke aufweisen.

2. Filterplatte nach Anspruch 1, dadurch gekennzeichnet, daß die zwischen den einzelnen Reihen der Profilstege innerhalb der Biegezone (7) gebildeten Nuten (11) V-förmige Nutwände aufweisen, die entsprechend der Biegeverformung der Biegezone (7) gegenseitig begrenzende Anschläge bilden.

## Claims

1. A filter plate for filter elements of a filter press in which a plurality of filter elements which are clamped together at their edges and which comprise a support wall (2) with a plate frame (3) extending therearound form between them filter chambers (1) with inlets (10) opening therein for the suspension to be filtered and carry press walls (4) which at one or both sides are sealingly connected at the edges to the filter element and which moreover can be advanced into the filter chamber by a pressure means and which on their wall surface which is towards the respective filter chamber (1) have profile projections (5, 9) which are covered with a filter cloth and which under the filter cloth form a channel system for the filtrate, said channel system being connected to an outlet, wherein the press wall (4) has an edge strip (6) providing its connection to the filter element and a bending zone (7) rich extends along said edge strip and which is deformable at least to the extent of the pressing stroke movement of the press wall, wherein the edge strip (6) is formed by a connecting strip portion which projects inclinedly from the support wall (2) in a direction away from the plate frame (3) and in so doing forms a V-shaped groove (8) between itself and the plate frame (3), characterised in that the two groove walls form a mutual abutment means and the groove width is such that the bending deformation of the connecting strip portion, which is admissible in consideration of the material used, is not exceeded when the press wall is completely advanced into the filter chamber, that in addition the profile projections (9) in the deformable bending zone (7) are in the form of elongate profile limb portions rich extend parallel to the edge or arcuately about the central inlet (10), wherein the profile limb portions which are arranged in the row directly adjoining the connecting strip portion are of approximately double the width of the other profile limb portions, and that the regions between the profile projections (9) are of a different thickness which increases in the direction towards the connecting strip portion.

2. A filter plate according to claim 1 characterised in that the grooves (11) which are formed between the individual rows of the profile limb portions within the bending zone (7) have V-shaped groove walls which form mutually delimiting abutment means in accordance with the bending deformation of the bending zone (7).

## Revendications

1. Plaque filtrante pour les éléments filtrants d'un filtre-presse dans laquelle plusieurs éléments filtrants constitués par une paroi de support (2) avec un cadre de plaque (3) circulaire et bloqués les uns contre les autres sur le bord, forment entre eux des chambres de filtration (1) dans lesquelles débouchent des entrées (10) pour la suspension à filtrer et portent sur un côté ou sur les deux côtés des parois de compression (4) dont les bords sont rattachés de manière étanche à l'élément filtrant mais qui peuvent par ailleurs être déplacées par un fluide sous pression vers l'intérieur de la chambre de filtration et présentent sur leur face dirigée vers la chambre de filtration (1) respective des saillies profilées (5, 9) revêtues d'un tissu filtrant, lesquelles forment sous ledit tissu filtrant un système de rigoles pour le produit filtré raccordé à une sortie, la paroi de compression (4) comprenant une bande latérale (6) qui assure son raccordement à l'élément filtrant et une zone de flexion (7) qui s'étend le long de cette bande latérale et peut être déformée au moins de la valeur de la course de compression de la paroi de compression, la bande latérale (6) étant constituée par une baguette de raccordement qui dépasse en oblique de la paroi de support (2) dans le sens opposé au cadre de plaque (3) et forme alors entre elle et ledit cadre de plaque (3) une rainure (8) en V, **caractérisée par le fait** que les deux parois de rainure forment une butée mutuelle et que la largeur des rainures est choisie de telle façon que, compte tenu du matériau considéré, la déformation par flexion admissible pour la baguette de raccordement n'est pas dépassée lorsque la paroi de compression est avancée complètement dans la chambre de filtration; qu'en plus, les saillies profilées (9) situées à l'intérieur de la zone de flexion (7) déformable sont conformées en barrettes profilées allongées qui s'étendent parallèlement au bord ou sont cintrées en arc autour de l'entrée centrale (10), les barrettes profilées disposées dans la rangée avoisinant directement la baguette de raccordement présentant sensiblement deux fois la largeur des autres barrettes profilées; et que les régions entre les saillies profilées (9) présentent une épaisseur variable qui augmente en direction de la baguette de raccordement.

2. Plaque filtrante selon la revendication 1, caractérisée par le fait que les rainures (11) formées à l'intérieur de la zone de flexion (7) entre les différentes rangées de barrettes profilées, présentent des parois de rainure en V qui forment des butées lesquelles se limitent mutuellement suivant la déformation par flexion de la zone de flexion (7).
